# EUROPÄISCHE PATENTSCHRIFT

(11) **EP 1 124 321 B1**
(45) Veröffentlichungstag und Bekanntmachung des Hinweises auf die Patenterteilung: **22.09.2004**
(21) Anmeldenummer: 00126546.1
(22) Anmeldetag: 11.12.2000
(51) Int. Cl.: H02P 1/46

(54) **Wechelstrom-Synchronmotor**
AC-synchron motor
Moteur synchrone à courant alternatif

(30) Priorität: 09.02.2000 DE 20002284 U
(43) Veröffentlichungstag der Anmeldung: 16.08.2001
(73) Patentinhaber: ebm-papst Mulfingen GmbH & Co.KG, 74673 Mulfingen (DE)
(72) Erfinder: Lelkes, András, Dr.-Ing., 74653 Künzelsau (DE); Krotsch, Jens, Dipl.-Ing.(FH), 97996 Niederstetten (DE)
(74) Vertreter: Patentanwälte Dr. Solf & Zapf

(56) Entgegenhaltungen:
- DE-A- 19 757 136
- FR-A- 2 699 018
- US-A- 5 008 573
- US-A- 5 905 322
- PATENT ABSTRACTS OF JAPAN vol. 007, no. 136 (E-181), 14. Juni 1983 (1983-06-14) & JP 58 051784 A (KUNIOMI OOGUCHI), 26. März 1983 (1983-03-26)

## Beschreibung

Die vorliegende Erfindung betrifft einen permanentmagneterregten, nach einem Anlauf im Synchronbetrieb allein netzgeführten Wechselstrom-Synchronmotor gemäß dem Oberbegriff des Patentanspruchs 1 (entsprechend EP-A-0 431 178).

Solche netzgeführten Synchronmotoren arbeiten im Synchronbetrieb mit einer Synchrondrehzahl, die von der Netzfrequenz und der Polpaarzahl eindeutig bestimmt wird. Der Anlauf aus dem Stillstand und der weitere Hochlauf bis in den Synchronismus wird in vielen Fällen mit besonderen Maßnahmen sichergestellt.

So beschreibt z. B. die EP 0 574 823 B1 eine elektronische Startvorrichtung für einen solchen Synchronmotor mit permanentmagnetischem Rotor. Ähnliche Einrichtungen sind auch in den weiteren Veröffentlichungen EP 0 654 890, EP 0 666 639, EP 0 682 404, DE 195 33 076, DE 195 33 344, DE 197 01 856 sowie EP 0 872 949 beschrieben. Alle diese Veröffentlichungen betreffen aber offensichtlich nur Motoren des Innenläufer-Typs.

Im Vergleich zu Synchronmotoren haben elektronisch kommutierte (Gleichstrom-) Motoren (sogenannte EC-Motoren) einen sehr ähnlichen Aufbau, allerdings wird ein EC-Motor über eine spezielle Elektronik mit einer elektronisch erzeugten Spannung versorgt, deren Frequenz und Phasenlage in Abhängigkeit von der Drehzahl bzw. Läuferposition stets so bestimmt wird, dass der Motor bei jeder beliebigen Drehzahl ein ausreichendes Drehmoment entwickelt. Deshalb ist bei EC-Motoren der Anlauf im Vergleich zu Synchronmotoren sehr viel unproblematischer. Dadurch sind bei EC-Motoren auch Ausführungen nach dem Außenläufer-Prinzip möglich, auch wenn dabei der Außenläufer wegen der recht hohen und auf relativ großem Radius umlaufenden Masse ein hohes Trägheitsmoment aufweist, welches dem Beschleunigungsmoment beim Anlauf entgegenwirkt. Die Kommutierungselektronik eines EC-Motors ist allerdings insbesondere bei Anwendungen, wobei direkt vom Wechselstromnetz betrieben werden soll, durch eine hohe Zwischenkreisspannung besonders aufwendig. Die Schaltelemente (MOSFETs oder IGBTs) müssen eine hohe Spannungsfestigkeit aufweisen, die aufwendige Ansteuerschaltung erhöht weiterhin die Kosten. Die erforderlichen Zwischenkreiskondensatoren sind nicht nur großvolumig, sondern begrenzen auch die Lebensdauer der Elektronik. Die Elektronik zieht keine sinusförmigen Ströme aus dem Netz, deshalb sind oft auch Maßnahmen für eine Leistungsfaktorkorrektur notwendig. Die gesamte Elektronik ist nicht nur kostspielig, sondern auch schwer im Motor integrierbar.

Das Außenläufer-Prinzip bietet für bestimmte Anwendungen, insbesondere für Ventilatoren, besondere Vorteile, denn ein Außenläufermotor ist aufgrund seiner im Statorinnenraum integrierbaren Lagerung und der kurzen Wickelköpfe besonders kompakt, so dass durch direkten Einbau in ein Lüfterrad eine sehr platzsparende Motor-Ventilatoreinheit gebildet werden kann. Durch die feste Verbindung aller drehenden Elemente ist eine genaue Auswuchtung und damit eine geringe Belastung der Lagerung gewährleistet. Eine hohe Lebensdauer wird außerdem durch die niedrige Lagertemperatur ermöglicht, da sich der Motor im Kühlstrom der geförderten Luft befindet. Ein weiterer Vorteil dieses Typs ist die einfachere und kostengünstige Wickeltechnik des Stators.

Obwohl diese Motorart sowohl für Radial- als auch für Axialventilatoren viele Vorteile bietet, sind Ventilatoren mit netzbetriebenem Außenläufer-Synchronmotor aus dem Stand der Technik bisher nicht bekannt.

Aus dem Stand der Technik sind aber andere spezielle Ausführungen von Außenläufer-Synchronmotoren bekannt.

So beschreibt die EP 0 050 456 einen Synchronmotor mit Innen- oder Außenläufer, der allerdings einen elektromechanischen, also bürstenbehafteten Kommutator aufweist.

Das DE-GM 71 03 331 beschreibt einen Reluktanz-Außenläufermotor.

Die EP 0 189 652 beschreibt einen Außenläufer-Wechselstrommotor, dessen Läufer aus drei Schichten besteht, und zwar einer Dauermagnet-Schicht mit hoher Koerzitivkraft und niedriger elektrischer Leitfähigkeit, einer weichmagnetischen Schicht mit hoher Permeabilität sowie aus einer ferromagnetischen Schicht mit hoher Permeabilität, hoher elektrischer Leitfähigkeit und ausgewähltem elektrischem Widerstand. Somit ist dieser Motor eigentlich eine Kombination von Asynchron-Kurzschlußmotor, Hysteresemotor und permanenterregtem Synchronmotor.

Die dem Oberbegriff des Anspruchs 1 entsprechende EP 0 431 178 beschreibt eine Synchronmaschine mit Außenläufer insbesondere als Generator. Nach der Beschreibung haben aber Generatoren und Motoren im wesentlichen denselben Mechanismus, so dass Generatoren grundsätzlich auch als Motoren angewendet werden können. Allerdings braucht ein Generator nicht selbständig anzulaufen. Deshalb enthält diese Veröffentlichung auch keine konkreten Hinweise auf eine Anwendung als Synchronmotor und die dabei auftretende Anlaufproblematik.

Auch die DE-A-14 88 370 beschreibt einen Gattungsgemäßen permanenterregten Außenläufer-Synchronmotor. Aus der Beschreibung geht aber hervor, dass dieser Motor einen Kurzschlußkäfig im Läufer enthält, so dass es sich um eine Kombination aus einem Asynchron- und einem permanenterregten Synchronmotor handelt.

Die DE 33 20 805 beschreibt eine vielpolige, mehrphasige Synchronmaschine als Ringmotor.

Die DE-PS 926 434 beschreibt einen Synchronmotor mit hysteresischem Stoff im Sekundärteil in der Ausführung als Innen- oder Außenläufermotor. Somit handelt es sich konkret um einen Hysteresemotor.

Schließlich beschreibt die DE 2 234 987 einen Einphasen-Hysterese-Synchronmotor mit speziell behandeltem Magnetwerkstoff.

Der vorliegenden Erfindung liegt die Aufgabe zugrunde, einen Wechselstrom-Synchronmotor zu schaffen, der die Vorteile eines reinen permanenterregten und netzgeführten Synchronmotors und eines EC-Motors des Außenläufer-Typs in sich vereint, und der trotz seines höheren Trägheitsmomentes einen einwandfreien Anlauf bis in den Synchronismus gewährleistet.

Diese Aufgabe wird durch die Merkmale des Anspruchs 1 gelöst. Vorteilhafte Ausgestaltungen der Erfindung ergeben sich aus den abhängigen Ansprüchen.

Der erfindungsgemäße Außenläufer-Synchronmotor zeichnet sich dadurch aus dass der Anlauf und Hochlauf trotz des erhöhten Trägheitsmomentes des Außenläufers ohne Entmagnetisierung möglich ist. Um den Synchronbetrieb sicher zu erreichen, wird bevorzugt eine spezielle, neuartige Startvorrichtung mit einer besonderen Anlauf-Ansteuerung des Motors eingesetzt. Dabei wird vorzugsweise der Anlauf des Außenläufers in mehrere Phasen unterteilt, in denen jeweils eine unterschiedliche, an die jeweilige Drehzahl optimal angepasste Ansteuerung der Statorwicklung erfolgt. Diese speziellen Maßnahmen werden weiter unten noch genauer erläutert werden.

Anhand der Zeichnung soll die Erfindung beispielhaft genauer erläutert werden. Dabei zeigen:
- Fig. 1: eine schematische Darstellung eines erfindungsgemäßen Außenläufer-Synchronmotors mit Blockschaltbild einer elektronischen Startvorrichtung,
- Fig. 2: eine Prinzipdarstellung einer zu der Startvorrichtung gehörenden Steuereinheit zur Erläuterung der Ansteuerung während der Anlaufphase,
- Fig. 3: ein Diagramm zur Darstellung des Verlaufs des Wicklungsstromes in Abhängigkeit von den Netzspannungshalbwellen bei einer Drehzahl nahe der Synchrondrehzahl,
- Fig. 4: ein Diagramm zur Darstellung des Verlaufs des Phasenwinkels zwischen Netzspannung und Polradspannung des Motors bei einer Drehzahl nahe der Synchrondrehzahl,
- Fig. 5: ein Diagramm wie in Fig. 3 zur Erläuterung des Vorgangs zur Erkennung einer für die Synchronisierung ausreichend hohen Drehzahl zwecks Übergang zur Synchronisierung,
- Fig. 6: ein Ablaufschema zur Erläuterung eines Algorithmus' zur Erkennung einer für die Synchronisierung ausreichend hohen Drehzahl,
- Fig. 7: ein entsprechendes Ablaufschema bezüglich eines Algorithmus' zur Erkennung des optimalen Zeitpunktes für ein erneutes Ansteuern der Statorwicklung nach einer passiven Phase zur Synchronisierung des Motors,
- Fig. 8: ein Phasenwinkel-Diagramm zur weiteren Erläuterung der Vorgänge zur Erkennung des optimalen Zeitpunktes für eine Synchronisierung,
- Fig. 9: Prinzipdiagramme bezüglich einer Änderung der Ansteuerung (Zündstrategie) nach Erkennung des für Synchronisierung optimalen Zeitpunktes,
- Fig.10: ein Diagramm mit beispielhafter Darstellung für einen Wicklungstromverlauf nach dem Eintritt in den Synchronismus, und
- Fig.11: ein weiteres Phasenwinkeldiagramm zur Erläuterung der Erkennung des optimalen Zeitpunktes für die Durchführung einer bevorzugten Fluß-Reduzierung.

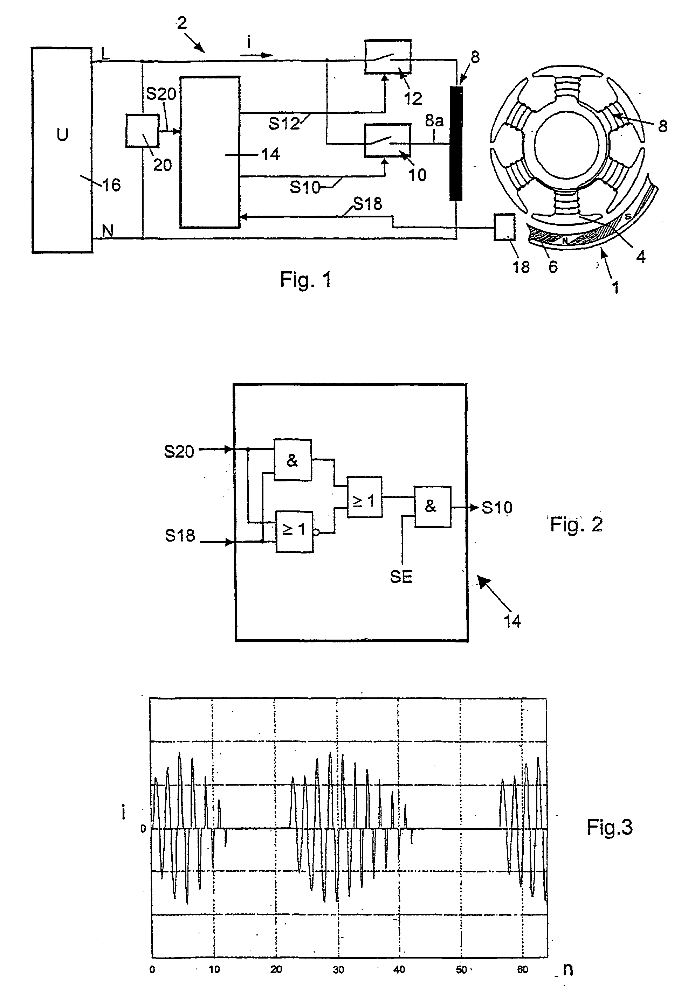

In Fig. 1 ist zunächst der Aufbau eines erfindungsgemäßen Außenläufer-Synchronmotors 1 sowie einer elektronischen Startvorrichtung 2 veranschaulicht. Der Synchronmotor 1 besteht aus einem inneren Stator 4 und einem um diesen rotierenden, permanentmagnetischen Außenläufer 6 (nur teilweise dargestellt). Der im wesentlichen zylindrische bzw. topf- oder glockenförmige Außenläufer 6 ist umfangsgemäß permanentmagnetisch magnetisiert, so dass in Drehrichtung abwechselnd magnetische Nord- und Südpole N, S gebildet sind.

Die elektronische Startvorrichtung 2 steuert den Stator 4 zum Anlauf des Außenläufers 6 derart an, dass der Außenläufer 6 exakt gesteuert bis zu seiner Synchrondrehzahl beschleunigt wird und dann im netzgeführten Synchronbetrieb weitertäuft. Erfindungsgemäß weist dazu der Stator 4 eine Statorwicklung 8 derart auf, dass der magnetische Fluß zumindest zwischen zwei Werten, und zwar einem höheren Fluß für den Anlauf und einem niedrigeren fluß für den Synchronbetrieb, veränderbar ist. Dazu weist die Statorwicklung 8 eine Anzapfung 8a auf, wobei über ein erstes Schaltelement 10 und die Anzapfung 8a für den höheren Fluß nur ein Teil der Statorwicklung 8 oder über ein zweites Schaltelement 12 für den niedrigeren Fluß die gesamte Statorwicklung 8 ansteuerbar ist. Die genaueren Hintergründe dieser Maßnahme werden weiter unten noch erläutert werden.

Die zu der Startvorrichung 2 gehörenden Schaltelemente 10, 12 sind jeweils als statischer Schalter, wie Thyristor oder Triac, ausgebildet, und sie sind von einer Steuereinheit 14 mit Steuersignalen S10, S12 ansteuerbar, um den Motor 1 bzw. die Statorwicklung 8 mit einer Wechselspannungsquelle 16 zu verbinden, üblicherweise mit der gebräuchlichen Netzspannung (Leitungen L und N) von 230 V, 50 Hz.

Die Steuereinheit 14 kann z.B. aus einem Mikroprozessor, Mikrocontroller, einem anwendungsspezifischen integrierten Schaltkreis (ASIC) oder aus einem programmierbaren logischen Baustein (PLD) bestehen.

Weiterhin sind zur Überwachung von steuerungsrelevanten Größen bevorzugt folgende Sensoren vorgesehen:
- Ein Läufersensor 18, der in der Nähe des Außenläufers 6 angeordnet und dazu vorgesehen ist, ein sich bei Rotation des Außenläufers 6 alternierend änderndes Magnetpolaritätssignal S18 zu erzeugen, welches in Abhängigkeit von der Drehrichtung entweder in Phase oder gegenphasig zu der vom permanentmagnetischen Rotor in der Statorwicklung induzierten Polradspannung verläuft. Wird im folgenden von der Polarität der Polradspannung gesprochen, so wird damit auf das Ausgangssignal S18 des Läufersensors Bezug genommen, eine direkte Erfassung der Polradspannung wird nicht durchgeführt.
- Ein Spannungssensor 20, der die Betriebs-Wechselspannung U bezüglich ihrer Polarität überwacht und ein entsprechend alternierendes Spannungspolaritätssignal S20 erzeugt.

Bevorzugt ist die Steuereinheit 14 derart ausgelegt, dass der Anlauf des Außenläufers 6 vom Stillstand bis in den Synchronismus in mehrere Phasen unterteilt ist, in denen dann jeweils eine unterschiedliche, an die jeweilige Drehzahl optimiert angepasste Ansteuerung der Statorwicklung 8 erfolgt. Im Einzelnen sind dies folgende Phasen:
Eine Anlaufphase I zum Starten des Außenläufers 6 aus dem Stillstand in die gewünschte Drehrichtung bis zu einer ersten Übergangsdrehzahl,
eine Hochlaufphase II zum Beschleunigen des Außenläufers 6 auf eine zweite, in der Nähe der Synchrondrehzahl liegende Übergangsdrehzahl,
eine - besonders bedeutsame - Synchronisierungsphase III zum gesteuerten Überführen der Läuferdrehzahl bis in die Synchrondrehzahl, d. h. bis in den sich dann anschließenden Synchronbetrieb IV.

Es sollen nun die technischen Hintergründe und die erfindungsgemäßen Maßnahmen noch detaillierter erläutert werden.

Da statische Schalter (Thyristoren oder Triacs) Strom nur einschalten, aber nicht ausschalten können, kann die Steuerung nach dem Zünden des Schalters den Strom nicht mehr beeinflussen. Abhängig von der Polarität der Netzspannung und der Polradspannung (also der vom Läufer induzierten Spannung) wird der Strom ein Beschleunigungs- oder Bremsmoment erzeugen. Die Polarität der Polradspannung wird über das Magnetfeld des Rotors über den Läufersensor 18 festgestellt. Alternativ kann die Rotorlage auch über optische Geber erfaßt werden. Die Steuerung kann also im Motor nur zeitlich begrenzt, in Abhängigkeit von der derzeitigen Phasenlage von Polradspanung (Rotorposition) des Motors und Netzspannung ein Beschleunigungsmoment erzeugen.

Die Dauer der Zeitphasen, in denen der Motor kein Beschleunigungdmoment erzeugen kann, weil dann die Polradspannung und die Netzspannung gegenphasig verlaufen, also der nach einem Zünden des Schalters entstehende Wicklungsstrom eine zur Polradspannung umgekehrte Polarität besitzen würde, nimmt mit der Drehzahl zu. Ebenfalls nimmt die Dauer der Zeitphasen zu, in denen eine Beschleunigung möglich ist. Je weiter sich die Motordrehzahl der Synchrondrehzahl nähert, desto länger werden diese Zeitperioden. In diesem Drehzahlbereich erzeugt der Motor ungünstige Schwingungen und Geräusche. Hätte der Läufer ein geringes Trägheitsmoment, wie bei Innenläufern, könnte er diesen kritischen Drehzahlbereich relativ einfach überspringen.

Allerdings ist der Hochlauf, beispielsweise bei Lüftern oder Gebläsen, bei denen das Lastmoment mit der Drehzahl quadratisch ansteigt, nur mit erhöhtem Fluß möglich, damit das bei Synchrondrehzahl erforderliche Drehmoment trotz der Phasen, in denen keine Beschleunigung erzeugt werden kann, im Mittel erreicht wird. Dies kann realisiert werden, indem die Netzspannung an die Anzapfung 8a der Statorwicklung 8 geschaltet wird, was größere Motorströme, größeren Fluß und so auch vergrößerte Drehmomente bedeutet. Allerdings muß dabei darauf geachtet werden, dass die erhöhten Motorströme eine größere Entmagnetisierungsgefahr für den Läufermagneten bedeuten, so dass die Möglichkeit, das Drehmoment wesentlich zu erhöhen, durch das Magnetmaterial begrenzt ist.

Durch die Ausführung als Außenläufermotor hat der Synchronmotor ein noch wesentlich höheres Trägheitsmoment. Deshalb braucht er deutlich höhere Energie zum Anlauf und Hochlauf. Dabei können Schwierigkeiten bei der Synchronisierung entstehen. Dies bedeutet, daß der Außenläufer-Synchronmotor zwar relativ problemlos Drehzahlen nahe der Synchrondrehzahl erreichen kann, dann aber womöglich nicht ohne weiteres in den Synchronismus springen könnte. Es ist deshalb vorteilhaft, insbesondere die Synchronisierungsphase III präziser steuerungstechnisch zu behandeln. Es seien aber zunächst auch die vorausgehenden Betriebsphasen detailliert erläutert.

### 1. Anlaufphase I

In dieser Phase erfolgt das Starten des Motors in den meisten Fällen aus dem Stillstand in die gewünschte Drehrichtung. Der Anlauf ist aber besonders kritisch, wenn sich der Motor beim Start bereits entgegen der gewünschten Richtung dreht, z. B. wenn er von einem Fremdmoment angetrieben wird (Beispiel: Gegendruck bei Ventilatoren).

Ein Innenläufermotor würde nach einem ersten Zünden des Schaltelementes schnell eine gewisse Drehzahl erreichen. Durch das größere Massenträgheitsmoment kann aber ein Außenläufermotor dagegen nur langsam beschleunigen. Deshalb ist es sinnvoll, eine separate Anlaufphase für den Außenläufer-Synchronmotor einzuführen. Dabei wird überprüft, ob die Zeitdauer zwischen zwei Polaritätswechseln des Magnetpolaritätssignals S18 zuverlässig erfasst werden kann. Solange dies nicht möglich ist, erfolgt die Ansteuerung des Schaltelementes 10 über ein angepasstes Steuerverfahren ohne Zeitinformation. Die Steuerung wertet hierfür nur die Polarität der Netzspannung, die Polarität der Polradspannung bzw. des Magnetpolaritätssignals aus, ohne dabei ihren zeitlichen Verlauf zu berücksichtigen. In dieser Betriebsphase wird somit ein auf kombinatorischer Logik beruhendes Steuerverfahren angewendet. Die Statorwicklung 8 wird hierbei nur dann mit der Netzspannung verbunden, wenn diese die gleiche Polarität wie die Polradspannung besitzt.

In Fig. 2 ist für eine bestimmte Drehrichtung beispielhaft eine solche kombinatorische Verknüpfung für die Ansteuerung des Schaltelementes 10 über das Steuersignal S10 dargestellt, wie sie während der Anlaufphase wirksam ist. Dabei werden das Magnetpolaritätssignal S18 und das Spannungspolaritätssignal S20 über logische Verknüpfungsglieder in der beschriebenen Weise zu dem Steuersignal S10 verarbeitet. Ein Eingangssignal SE dient dabei zur Aktivierung der Anlaufphase. Der Anlauf bzw. die Beschleunigung in die gewünschte Drehrichtung ist durch die kombinatorische Logik eindeutig festgelegt. Das beschriebene Ausführungsbeispiel (Fig. 2) bezieht sich auf eine bestimmte Drehrichtung des Motors. Für Linkslauf wird z.B. der Schalter 10 dann gezündet, wenn S18 und S20 den gleichen logischen Pegel besitzen, für den Rechtslauf des Motors müssen S18 und S10 verschiedene logische Pegel besitzen. Im letzteren Fall wird das Signal des Läufersensors 18 invertiert.

Die oben bereits ansgesprochene Zeitmessung zwischen zwei Polaritätswechseln des Magnetpolaritätssignals S18, d.h. der Polradspannung, die als Kriterium für den Übergang von der Anlaufphase zur Hochlaufphase dient, kann mit Vorteil über einen digitalen Zähler erfolgen, der zyklisch mit einer festgelegten Frequenz weitergestellt wird. Bei einem auftretenden Polaritätswechsel wird der Zählwert für die weitere Verarbeitung durch die Steuereinheit 14 ausgelesen und zeitgleich für eine neue Zeitmessung zurückgesetzt. Es kann eine bestimmte maximale Zeitdauer, die vom Endwert und der Taktfrequenz des Zählers abhängt, erfasst werden, bis ein Zählerüberlauf auftritt. Das beschriebene Steuerverfahren für den Anlauf bleibt daher solange aktiv, bis die zu messende. Zeitdauer kurz genug, d.h. die Drehzahl entsprechend hoch ist, daß keine Überläufe des Zählers mehr auftreten, d.h. der bei einem Polaritätswechsel ausgelesene Zählerwert zuverlässig die Zeitdauer zwischen zwei Polaritätswechseln der Polradspannung wiedergibt, wobei eine Bestimmung der aktuellen Läuferposition (Drehwinkel) möglich ist.

Die Anlaufphase ist abgeschlossen, wenn der Motor eine Drehzahl erreicht hat, die es für die Steuerung ermöglicht, zuverlässig nach der für die Hochlaufphase vorgesehenen Methode arbeiten zu können. Im Beispiel geschieht dies bei einem vierpoligen Motor bei einer Drehzahl von ca. 300 1/min, d.h. bei etwa 20% seiner Synchrondrehzahl, wenn er am 50 Hz-Netz betrieben wird.

### 2. Hochlaufphase II

Ziel der Hochlaufphase ist es, den Motor in die Nähe der Synchrondrehzahl zu bringen. Dazu ist es notwendig, ein im Mittel möglichst maximales, in die gewünschte Drehrichtung wirkendes, beschleunigendes Drehmoment zu erzeugen, ohne dabei aber den permanentmagnetischen Läufer zu entmagnetisieren.

Aufgrund der für den Außenläufer typischen, niedrigeren Beschleunigungswerte kann vorteilhafterweise auf eine absolute Bestimmung der Läuferposition durch die Auswertung mit beispielsweise analogen Hall-Sensoren verzichtet werden. Statt dessen kann die aktuelle Läuferposition, wie bereits angesprochen, vorteilhaft anhand der vorhergehenden Zeiten zwischen zwei aufeinanderfolgenden Polaritätswechseln der Polradspannung bzw. des Magnetpolaritätssignals S18 und der seit dem letzten Polaritätswechsel verstrichenen Zeit mit guter Genauigkeit berechnet werden. Diese Methode hat den entscheidenden Vorteil, dass auf die Auswertung von analogen Signalen, die in Zusammenhang mit der Läuferposition stehen, verzichtet werden kann, was zu einer kostengünstigeren Lösung führt.

Die Steuerungsmaßnahme während der Hochlaufphase erfolgt auf folgende Weise:

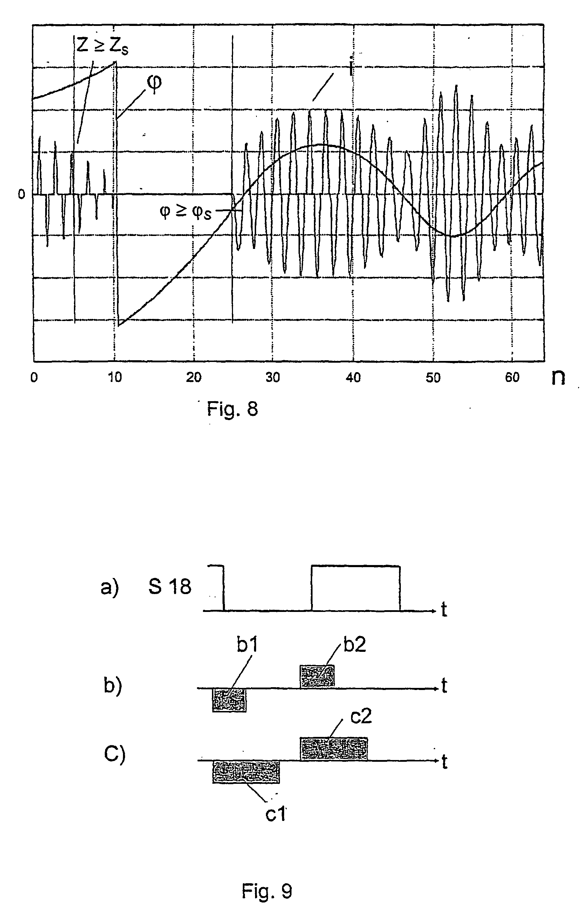

Es erfolgt eine vorausschauende Bewertung der Phasenlage zwischen Netzspannung (Signal S20) und Polradspannung bzw. Rotorposition (Signal S18), ob, wenn zum aktuellen Zeitpunkt der Schalter S10 gezündet wird, sich eine maximal beschleunigende Wirkung in Drehrichtung ergibt. Dies geschieht durch Definition von auf die Rotorposition, d.h. auf das Signal S18 bezogenen Bereichen, in denen selektiv die positiven oder negativen Halbwellen oder Halbwellenteile der Netzspannung auf die Wicklung geschaltet werden, wie dies in Figur 9 dargestellt ist.

Die Hochlaufphase ist abgeschlossen, wenn die Steuerung erkennt, dass der Läufer die Synchrondrehzahl nahezu erreicht hat. Im Beispiel trifft dies bei einem vierpoligen Motor bei einer Drehzahl von etwa 1350 1/min, d.h. bei etwa 90% seiner Synchrondrehzahl zu, wenn der Motor am 50 Hz-Netz betrieben wird.

Ein Innenläufermotor mit kleiner mechanischer Zeitkonstante würde nun automatisch während einer Beschleunigungsphase bis in den Synchronismus mitgerissen, wenn die Drehzahl nahe genug bei der Synchrondrehzahl liegt. Durch das im Vergleich zum Innenläufer größere Massenträgheitsmoment des Außenläufers, insbesondere in Verbindung mit einem Lüfterrad, kann es durch die sich langsam ändernde Phasenlage zwischen Netzspannung und Polradspannung in der Nähe der Synchrondrehzahl jedoch zu einer ausgeprägten, niederfrequenten Schwebung des Motorstromes und des Drehmomentes kommen, was die Synchronisierung erschweren kann. Daher ist es vorteilhaft, eine zusätzliche Betriebsphase, die erfindungsgemäße Synchronisierungsphase, einzuführen.

### 3. Synchronisierungsphase III

Diese Phase kann bevorzugt noch feiner untergliedert werden:
III.1. Erkennung des für die Synchronisation günstigen Zeitpunktes, bestimmt durch die Phasenlage zwischen Polradspannung (bzw. Rotorposition) und Netzspannung,
III.2. Stabilisierungsphase, in der ein Abklingen von Ausgleichsvorgängen erfolgt (in einer besonders vorteilhaften Ausführung der Erfindung aktiv durch die Steuereinheit 14 durch geeignetes Anpassen der Wicklungsspannung unterstützt),
III.3. Erkennung des günstigsten Zeitpunktes für eine Flußanpassung, vorzugsweise durch Umschaltung der Statorwicklung 8.

Die Synchronisierungsphase ist beendet, wenn die dynamischen Vorgänge nach der Flußanpassung abgeschlossen sind und der Motor synchron mit der Frequenz der Netzspannung und mit konstanter Phasenlage zwischen Netzspannung und Polradspannung läuft.

### III.1. Erkennung des günstigen Synchronisationszeitpunktes

Durch die größere mechanische Zeitkonstante (höheres Trägerheitsmoment) des Außenläufermotors, insbesondere bei Verwendung zum Antrieb eines Lüfterrades, kommt es während des Hochlaufs bei Drehzahlen in der Nähe der Synchrondrehzahl zu einer ausgeprägten, niederfrequenten Schwebung der Amplitude des Wicklungsstromes und damit des Drehmomentes. Dies ist durch die sich immer langsamer ändernde Phasenlage zwischen Netzspannung und Polradspannung bedingt, je näher die Drehzahl zur Synchrondrehzahl kommt. Es entstehen immer länger werdende Zeitphasen, in denen keine Beschleunigung möglich ist, weil Netzspannung und Polradspannung gegenphasig sind. In diesen Phasen kommt erschwerend hinzu, dass die Drehzahl des Motors durch die mechanische Last reduziert wird.

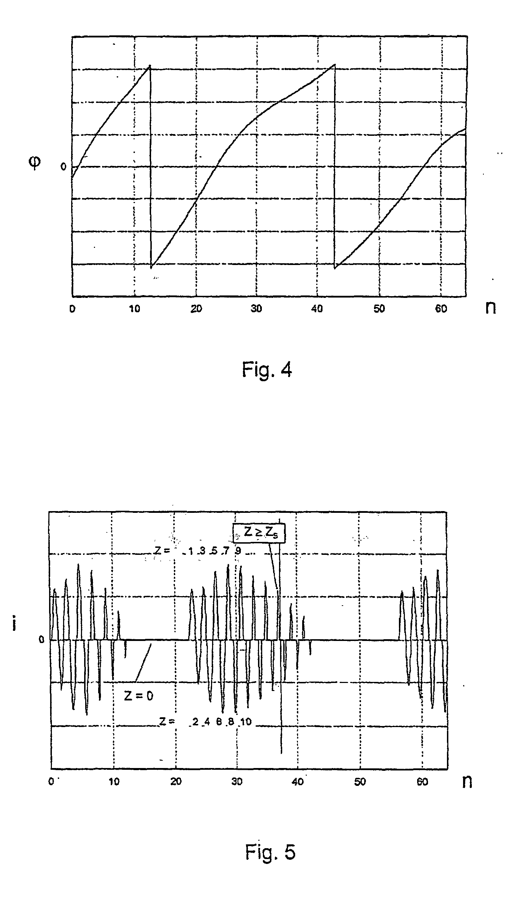

In Fig. 3 ist beispielhaft ein Wicklungsstromverlauf eines Außenläufer-Synchronmotors und in Figur 4 die Phasenlage von Netzspannung zu Polradspannung über der Zeit bei Drehzahlen im Bereich von 85 - 90% der Synchrondrehzahl dargestellt. Dabei sind auf der Abszisse die Netzspannung-Halbwellen nach Anzahl n aufgetragen. Eine Zündung des Schalters 10 erfolgt z.B. im positiven Teilbereich des Diagramms nach Fig. 4, was der beschleunigenden Phase entspricht, im negativen Teilbereich des Diagramms erfolgt keine Ansteuerung des Schalters.

Beim Außenläufer entscheidet der Zeitpunkt nach einer Bestromungspause, zu dem erneut mit dem Zuschalten der Wicklung an das Netz begonnen wird, über eine sichere Synchronisierung des Motors mit der Netzspannung. Das erneute Zuschalten der Wicklung nach der Bestromungspause erfolgt erfindungsgemäß dann, wenn die Polradspannung zur Netzspannung eine solche Phasenlage eingenommen hat, dass der beim Durchschalten des Schaltelementes hervorgerufene Wicklungsstrom (unter Berücksichtung einer möglichen Entmagnetisierung des permanentmagnetischen Läufers) eine im Mittel maximale beschleunigende Wirkung erzeugt. Dies ist dann der Fall, wenn die Netzspannung zur Polradspannung näherungsweise phasengleich verläuft oder ihr leicht voreilt.

Hierfür wird zunächst festgestellt, ob die Drehzahl in der Nähe der Synchrondrehzahl liegt. Dies kann mit Vorteil über die Auswertung der Frequenz erfolgen, mit der sich die Bereiche kontinuierlicher Bestromung und die Bereiche ohne Stromfluß abwechseln. Diese "Schwebungsfrequenz" ist die Differenz der elektrischen Drehfrequenz des Läufers und der Netzfrequenz.

Als Kriterium für eine bevorstehende Synchronisierung (Drehfrequenz ≈ Frequenz der Netzspannung) wird bevorzugt die Anzahl der in Folge durchgeschalteter Stromhalbwellen oder Teilbereiche und in Folge nicht zum Bestromung genutzter Halbwellen der Netzspannung herangezogen. Durch das relativ große Massenträgheitsmoment des Außenläufers treten diese Schwebungseffekte ausgeprägt auf, was erfindungsgemäß gezielt ausgenutzt wird.

In Fig. 5 ist beispielhaft ein solcher Fall der Erkennung einer für die Synchronisierung ausreichend hohen Drehzahl veranschaulicht. Während der aktiven, beschleunigenden Zeitphase werden die in Folge auf die Statorwicklung geschalteten Netzspannung-Halbwellen oder angeschnittenen Halbwellenteile über einen Zähler Z erfasst. Erfolgt während einer Netzhalbwelle keine Ansteuerung des Schaltelementes 10, d.h. wird die Wicklung 8 nicht mit der Netzspannung verbunden, so wird Z zurückgesetzt. Der Zählerwert, d.h. die Anzahl der in Folge durchgeschalteten Halbwellen (teile), wird fortlaufend mit einem vorgegebenen Grenzwert Z_{S} verglichen. Hat Z den Vergleichswert Z_{S} erreicht, so bedeutet dies, dass eine für die Synchronisierung ausreichend hohe Drehzahl erreicht ist und die Synchronisierung bevorsteht. Der Vergleichswert Z_{S} ist motorspezifisch und hängt von der mechanischen Zeitkonstante des Systems ab.

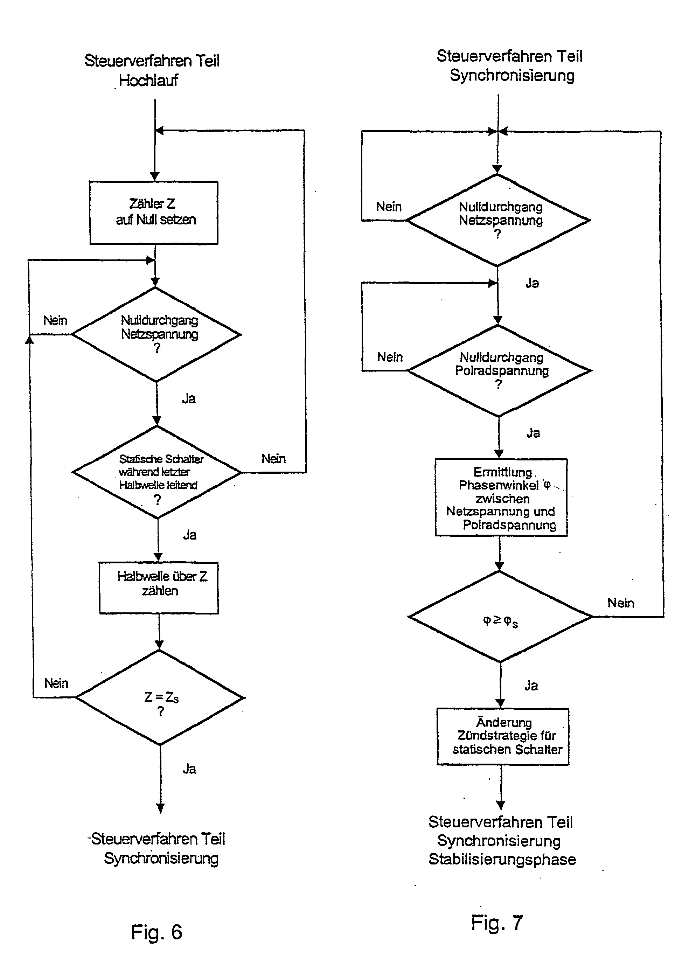

Fig. 6 zeigt beispielhaft die Erkennung in Form eines Flußdiagramms. Sind die im Flußdiagramm dargestellten Kriterien erfüllt, d.h. wurde der Schalter 10 während Zs Netzhalbwellen in Folge angesteuert, dann ist die Synchrondrehzahl nahezu erreicht und die Synchronisierung steht unmittelbar bevor (ein Zs von beispielsweise 20 entspricht einer Drehzahl von 95% der Synchrondrehzahl).

Sinngemäß kann natürlich als Kriterium auch die Anzahl der in Folge nicht durchgeschalteten Halbwellen (teile) dienen.

Die exakte Erkennung des optimalen Zeitpunktes für das erneute Zuschalten der Wicklung an die Netzspannung nach der passiven Zeitphase erfolgt über die Phasenlage von Netzspannung und Polradspannung.

Hierfür wird die Phasenverschiebung ϕ zwischen dem Spannungspolaritätssignal S20 der Netzspannung und dem Magnetpolaritätssignal S18 (entsprechend der polradspannung) von der Steuereinheit 14 erfasst und mit einer vorgegebenen Schwelle ϕₛ verglichen. Das erneute Ansteuern der Wicklung nach der passiven Zeitphase erfolgt, nachdem die Phasenverschiebung die Schwelle erreicht oder überschritten hat, erfindungsgemäß dann, wenn die Netzspannung der Polradspannung leicht vorteilt, d.h. der nach dem Zünden entsprechende Wicklungsstrom i im Mittel eine maximale beschleunigende Wirkung erzielt (in Phase mit der Polradspannung verläuft). Der Wert ϕ_{S} ist motorspezifisch und hängt hauptsächlich von der elektrischen Zeitkonstante der Statorwicklung 8 ab.

Fig. 7 verdeutlicht den steuerungstechnischen Ablauf der Erkennung des Zeitpunktes des erneuten Zündens des Schaltelementes 10 nach der passiven Phase in Form eines Flußdiagramms. Es wird fortlaufend die Phasenlage zwischen den Signalen S20 und S18 von der Steuereinheit 14 bestimmt, beispielhaft in Form einer Zeitmessung zwischen der Pegeländerung des Signals S20, entsprechend dem Nulldurchgang der Netzspannung, und der Pegeländerung des Signals S18, entsprechend dem Nulldurchgang der Polradspannung. Wird eine vorgegebene Grenze der Phasenlage erreicht oder überschritten, dann erfolgt die erneute Ansteuerung des Schalters 10 gemäß einer der Synchronisierung angepaßten Zündstrategie auf die weiter unten beschriebene Weise nach Fig. 9.

In Fig. 8 ist der zeitliche Verlauf der Phasenlage zwischen Netzspannung und Polradspannung kurz vor und während des Synchronisierens dargestellt. Sie verdeutlicht den gemäß Fig. 7 beschriebenen Vorgang, in dem der Wicklungsstrom und die Phasenlage beispielhaft über der Zeit aufgetragen sind. Zum Zeitpunkt, in dem die Bedingung Z ≥ Z_{S} erfüllt ist, steht die Synchronisierung unmittelbar bevor. Zum Zeitpunkt ϕ ≥ ϕ_{S} erfolgt die erneute Ansteuerung mit angepaßter Zündstrategie.

Da die Synchronisierung stets bei Synchrondrehzahl erfolgt, kann im praktischen Fall anstatt der Phasenverschiebungswinkel ϕ und ϕ_{S} vorteilhafter die zeitliche Verschiebung der Netzspannung gegenüber der Polradspannung Δ t= ϕ/ω bzw.Δt_{S} = ϕₛ/ω mit ω = 2πf= const genutzt werden.

### III. 2. Stabilisierungsphase

Nach dem Erkennen des geeigneten Zeitpunktes für die Synchronisierung, d.h. für die erneute Ansteuerung der Statorwicklung nach dem passiven Bereich bei ausreichend hoher Drehzahl, wird die Zündstrategie des Schaltelementes geändert. Während der Hochlaufphase wurde bewußt eine Zündung kurz vor dem Polaritätswechsel der Polradspannung, d.h. des Magnetpolaritätssignals S18, unterdrückt, um im Mittel ein möglichst maximales, beschleunigendes Drehmoment zu erzeugen.

Während und nach der Synchronisierungsphase wird dagegen diese Einschränkung teilweise aufgehoben, d.h. es werden zeitweise auch bremsenden Drehmomente zugelassen, um so den Motor im Synchronismus zu halten.

In dieser geänderten Zündstrategie erfolgt eine Feststellung und Bewertung der Phasenlage zwischen Netzspannung (Signal S20) und Polradspannung bzw. Rotorposition (Signal S18) wie beim Hochlauf des Motors. Im Falle des Synchronlaufs ist der zulässige Bereich der Phasenlage, bei dem eine Zündung des Schalters 10 über das Signal S10 erfolgt, jedoch größer, um nicht ausschließlich eine maximale Beschleunigung zu erzielen. Der zulässige Bereich der Phasenlage wird über Bereiche festgelegt, die auf die Rotorposition (Polradspannung) bezogen sind, in denen jeweils die positive oder negative Halbwelle oder Halbwellenteile der Netzspannung auf die Wicklung geschaltet wird (vgl. Fig. 9).

Wird beispielsweise ein für einen Innenläufermotor an sich bekanntes Steuerverfahren für den Hochlauf des Außenläufer-Synchronmotors angewandt, bei dem auf die Rotorposition bezogene, periodisch auftretende Zeitausschnitte für die Freigabe der Ansteuerung des Schaltelementes festgelegt werden, bedeutet dies, dass der Zeitbereich, bei dem eine Ansteuerung möglich ist, ausgedehnt und der Zeitausschnitt, bei dem keine Ansteuerung erlaubt ist, verkleinert wird. In Fig. 9 ist beispielhaft die Anpassung der Zeitbereiche dargestellt, wie sie nach dem Erkennen des optimalen Zeitpunktes nach der passiven Phase zur Synchronisierung des Außenläufer-Synchronmotors vorgenommen werden muß. Das Diagramm a zeigt die Polradspannung bzw. das Magnetpolaritätssignal S18. Das Diagramm b zeigt die Zeitbereiche für selektive Ansteuerung des Schaltelementes beim Hochlauf, b1 zünden bei negativer Netzspannung, b2 zünden bei positiver Netzspannung. Das Diagramm c zeigt die entsprechenden Zeitbereiche beim Synchronlauf. Durch die Ausdehnung der Zeitabschnitte, bei denen das Zünden des Schaltelementes freigegeben ist, wie in Fig. 9 gezeigt, werden Wicklungsströme zugelassen, die über den Polaritätswechsel hinaus andauern und nach diesen somit eine bremsenden Drehmomentwirkung erzeugen. Je weiter die Netzspannung der Polradspannung nacheilt, desto größer wird der zeitliche Anteil dieser bremsenden Drehmomente. Dadurch sinkt das mittlere Drehmoment. Im umgekehrten Fall nimmt der zeitliche Anteil der bremsenden Drehmomente ab, wodurch das mittlere Drehmoment ansteigt. Eine Zunahme der mechanischen Belastung bewirkt durch ein Abbremsen des Läufers eine Phasenverschiebung hin zu voreilender Netzspannung, wodurch das mittlere Drehmoment ansteigt und einem Außer-Tritt-Fallen entgegenwirkt. Ein mechanisches Entlasten des Motors bewirkt dagegen eine Beschleunigung des Läufers und dadurch eine Änderung der Phasenlage hin zu nacheilender Netzspannung, wodurch das mittlere Drehmoment sinkt und damit einer weiteren Beschleunigung entgegenwirkt.

Einer zunehmenden Beschleunigung des Motors (über die Synchrondrehzahl) wird so durch Zunahme bremsender Drehmomente entgegengewirkt und umgekehrt. Der Motor wird dadurch gut im Synchronismus gehalten. Er bildet jedoch ein schwingungsfähiges System, dessen Dämpfung im Allgemeinen nur vom statischen Lastmoment bestimmt wird.

Beim Übergang vom Asynchronlauf in den Synchronlauf des Motors kommt es daher zu einer periodischen Schwankung der Phasenlage zwischen den Größen Netzspannung, Wicklungsstrom und Polradspannung (Einschwingvorgang), was sich in einer ebenfalls periodischen Änderung der Amplitude des Wicklungsstromes und des Drehmomentes äußert. Diese Schwingung wird durch das Lastmoment mehr oder weniger stark gedämpft und klingt mit der Zeit ab.

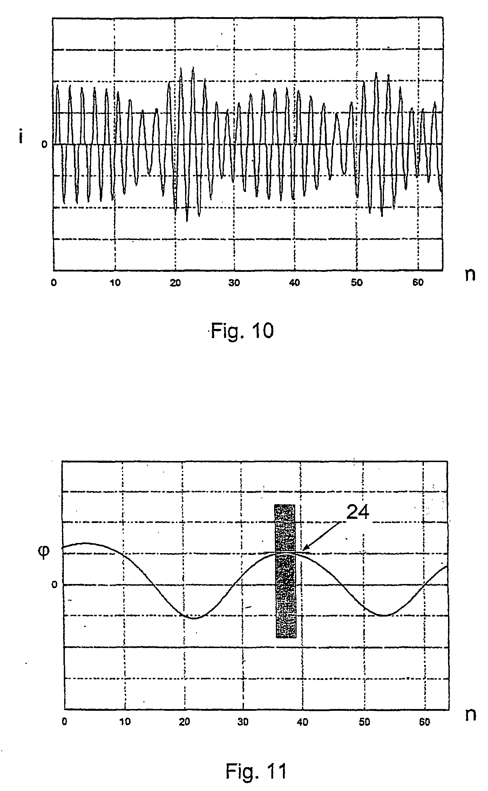

Fig. 10 zeigt als Beispiel einen solchen, für den Außenläufermotor typischen Wicklungsstromverlauf, wie er kurz nach Eintritt in den Synchronismus vorliegt. Diese, durch die große mechanische Zeitkonstante des Außenläufers bedingte, bezüglich der Netzfrequenz verhältnismäßig niederfrequente Schwingung erlaubt es, eine aktive Dämpfung nach der Synchronisierung durch geeignete Änderung des Effektivwertes der Wicklungsspannung z.B. über Phasenanschnitt der Netzspannung durchzuführen. Hierbei wird die effektive Wicklungsspanung erfindungsgemäß so geändert, dass der Stromfluß und dadurch die Drehmomentbildung dahingehend beeinflußt werden, dass die Schwingungsneigung reduziert wird und die Phasenlage zwischen Netzspannung und Polradspannung über das Signal S18 des Läufersensors auf einem vorgegebenen Referenzwert gehalten wird.

Der Referenzwert wird erfindungsgemäß so festgelegt, dass er der Phasenlage zwischen Netzspannung und Polradspannung entspricht, die nach der Flussanpassung erwartet wird.

Einer Beschleunigung über die Synchrondrehzahl hinaus, d.h. einer Änderung der Phasenlage zu voreilender Polradspannung hin, wird mit kleinen effektiven Wicklungsspannungen (= reduziertes beschleunigendes Drehmoment) entgegenwirkt. Auch einer Abbremsung unter die Synchrondrehzahl, was gleichbedeutend mit einer Änderung der Phasenlage hin zu voreilender Netzspannung ist, wird mit großen effektiven Wicklungsspannungen (= großes beschleunigendes Drehmoment) entgegengewirkt.

Diese aktive Dämpfung wird z.B. über einen digitalen PID-Phasenregelkreis von der Steuereinheit 14 durchgeführt, der einen Vergleich der Phasenlage zwischen Netzspannung und Polradspannung (Regelgröße) vornimmt und sie über die Zündverzögerungszeit der Phasenanschnittsteuerung (Stellgröße) derart beeinflußt, dass die Abweichung vom vorgegebenen Referenzwert (Führungsgröße) gegen Null geht.

Die Wicklungsspannung wird wie bei aus dem Stand der Technik bekannten Verfahren z.B. durch Phasenanschnittsteuerung oder durch Sperren von einzelnen Netzhalbwellen realisiert.

Durch diese bevorzugte Methode kann das Einschwingen beim Übergang zum Synchronlauf reduziert und dadurch die hierbei normalerweise entstehenden, störenden akustischen Geräusche verringert werden. Die Anwendung dieser aktiven Dämpfung der Schwingungsneigung ist nicht nur auf den Betriebsfall des Synchronisierens beschänkt, sondern kann auch während des stationären Synchronbetriebs vorteilhaft genutzt werden, um das Betriebsverhalten im Synchronismus zu stabilisieren.

Es sei bemerkt, dass eine Anwendung der beschriebenen Methode bei einem Innenläufer-Synchronmotor im Allgemeinen nicht möglich ist, da die Schwingung aufgrund seiner wesentlich kleineren mechanischen Zeitkonstante mit höherer Frequenz als beim Außenläufer abläuft und dadurch die Beeinflussung der Wicklungsspannung mit der doppelten Netzfrequenz, wie sie bei Phasenanschnitt geschieht, nicht ausreicht.

### III.3. Flußanpassung

Für die Betriebsphasen I. Anlauf, II. Hochlauf und III. Synchronisierung benötigt der Synchronmotor einen höheren Fluß als den, der für den Synchronbetrieb hinsichtlich eines maximalen Wirkungsgrades vorgesehen ist. In der erfindungsgemäßen Ausführung ist - wie bereits beschrieben - die Statorwicklung 8 in zwei Teile aufgeteilt, die jeweils mittels der zugehörigen Schaltelemente 10 oder 12 individuell mit Strom versorgt werden können (vgl. Fig. 1).

Bei dem Außenläufer-Synchronmotor ist der Zeitpunkt, zu dem die Wicklungsumschaltung zur Flußreduzierung bei Synchronbetrieb vorgenommen wird, entscheidend für das Verharren im Synchronismus. Erfolgt die Flußreduzierung zu einem ungünstigen Zeitpunkt, so kann der Motor wieder außer Tritt fallen. Die Versuche haben überraschenderweise gezeigt, dass die Flußreduzierung, sofern zu einem günstigen Zeitpunkt durchgeführt, das Einschwingen des Motors nahezu vollständig beenden kann.

Die Wicklungsumschaltung, d.h. die Ansteuerung des Schaltelementes 12 für große Windungszahl anstatt des Schaltelementes 10 für kleine Windungszahl, erfolgt bevorzugt zum Nulldurchgang des Wicklungsstromes. Die Erkennung des optimalen Zeitpunktes für die Wicklungsumschaltung ist abhängig davon, ob die oben beschriebene aktive Dämpfung realisiert wird oder nicht.

Mit oder aktiven Dämpfung wird die Stabilisierungsphase als abgeschlossen betrachtet, wenn die Schwankung der Phasenlage der elektrischen Größen durch die aktive Dämpfung auf ausreichend kleine Werte zurückgegangen ist und so der Synchronbetrieb des Motors durch die Flußanpassung nicht gefährdet wird. Hierfür wird entweder die Phasenlage der für den oben beschriebenen Phasenregelkreis herangezogenen Signale (Phasenlage von Netzspannung zu Polradspannung) oder das Ausgangssignal des Reglers (Anschnittwinkel der Netzspannung) betrachtet. Ist die Bedingung einer ausreichend kleinen zeitlichen Schwankung erfüllt, erfolgt die Umschaltung auf einen kleineren Fluß, d.h. die Ansteuerung des Schaltelementes 12 für große Windungszahl, beim nächsten Nulldurchgang des Wicklungsstromes.

Wird dagegen auf eine aktive Dämpfung verzichtet, dann existiert durch die statische Last nur eine verhältnismäßig geringe Dämpfung. Der Motor läuft im Mittel mit Synchrondrehzahl, seine Momentandrehzahl pendelt jedoch mit der Schwingfrequenz des Systems um den Synchronpunkt. Phasen der Schwingung, bei denen die Netzspannung gegenüber der Polradspannung voreilt, wirken beschleunigend, wohingegen Phasen, bei denen die Polradspannung gegenüber der Netzspannung voreilt, bremsend wirken. Ist die Drehzahl größer als die Synchrondrehzahl, dann ändert sich die Phasenlage hin zu voreilender Polradspannung, was zu einer bremsenden Schwingungsphase führt, in der die Drehzahl abnimmt. Ist die Drehzahl dagegen kleiner als die Synchrondrehzahl, dann ändert sich die Phasenlage hin zu voreilender Netzspannung, was in einer beschleunigenden Schwingungsphase resultiert, in der die Drehzahl wieder zunimmt.

Der vorteilhafte Zeitpunkt für eine Flußanpassung zur Wirkungsgradsteigerung liegt dann vor, wenn die Abweichung der Momentandrehzahl von der Synchrondrehzahl vom negativen (untersynchronen) Bereich in den positiven (übersynchronen) Bereich wechselt. Dies entspricht dem Zeitpunkt, zu dem die zeitliche Änderung des Phasenwinkels zwischen Netzspannung und Polradspannung Null und die Beschleunigung maximal ist. Durch die hier erfolgende Reduzierung des Flusses, indem eine Ansteuerung des Schalters 12 anstatt des Schalters 10 zum nächsten Nulldurchgang des Wicklungsstromes geschieht, wird eine erneute übermäßige Beschleuniguhg über die Synchrondrehzahl hinaus vermieden, wodurch die Schwingung des Systems reduziert und ein Außer-Tritt-Fallen des Motors verhindert wird.

Im Ausführungsbeispiel wird die zeitliche Änderung der Phasenlage zwischen Netzspannung und Polradspannung von der Steuereinheit 14 über Zeitmessung zwischen dem Nulldurchgang der Netzspannung (Signal S20) und dem Nulldurchgang der Polradspannung (Signal S18) ermittelt. Der vorteilhafte Zeitpunkt fällt mit dem zeitlichen Maximum der Phasenlage zwischen Netzspannung und Polradspannung zusammen, welches über ein durch den Stand der Technik bekanntes, numerisches Verfahren zur Extremwertbestimmung von der Steuereinheit 14 festgestellt wird.

In Fig. 11 ist beispielhaft der zeitliche Verlauf der Phasenlage dargestellt sowie bei 24 der günstigste Zeitpunkt bzw. Zeitrahmen für die Flußreduzierung.

Natürlich kann zur Erkennung des vorteilhaften Zeitpunktes für die Flußreduzierung auch die Abweichung der Drehzahl von der Synchrondrehzahl herangezogen werden. Dies erfolgt durch die Differenzbildung der Zeitdauer zwischen zwei Nulldurchgängen der Polradspannung über das Läufersensorsignal S18, mit der Zeitdauer zwischen den Nulldurchgängen der Netzspannung über das Netzspannungspolaritätssignal S20 durch die Steuereinheit 14. Die Zeiten sind umgekehrt proportional zur Drehfrequenz des Motors bzw. zur Netzfrequenz, weshalb eine Bestimmung des Zeitpunktes nach dieser Methode möglich ist. Der Zeitpunkt für die Flußanpassung liegt dann vor, wenn die oben genannte Differenz vom positiven (untersynchronen) Bereich in den negativen (übersynchronen) Bereich wechselt.

Der Zeitpunkt, in dem die Flußreduzierung durchgeführt wird, beeinflußt beim Außenläufer-Synchronmotor (im Gegensatz zur Innenläufer-Ausführung) das Motorverhalten entscheidend. Erfolgt die Flußanpassung nach der beschriebenen Methode, wird ein sicheres Verharren im Synchronismus erreicht, d.h. ein Außer-Tritt-Fallen verhindert. Als weiterer wesentlicher Vorteil wird das eigentlich generell vorhandene Einschwingen nach der Anpassung auf ein Minimum reduziert, was das Geräuschverhalten positiv beeinflußt.

## Patentansprüche

1. Permanentmagneterregter, netzgeführter Wechselstrom-Synchronmotor (1) in einer Ausführung als Außenläufermotor mit einem um einen inneren Stator (4) rotierenden, permanentmagnetischen Außenläufer (6),
**dadurch gekennzeichnet, dass** der Stator (4) eine Statorwicklung (8) derart aufweist, dass der magnetische Fluß zumindest zwischen zwei Werten, und zwar einem höheren Fluß für den Anlauf und einem niedrigeren Fluß für den Synchronbetrieb, veränderbar ist, wozu die Statorwicklung (8) eine Anzapfung (8a) aufweist, wobei über ein erstes Schaltelement (10) und die Anzapfung (8a) für den höheren Fluß nur ein Teil der Statorwicklung (8) oder über ein zweites Schaltelement (12) für den niedrigeren Fluß die gesamte Statorwicklung (8) ansteuerbar ist, und wobei die Schaltelemente (10, 12) jeweils als statischer Schalter, wie Triac oder Thyristor, ausgebildet und von einer Steuereinheit (14) mit Steuersignalen (S10, S12) ansteuerbar sind.

2. synchronmotor nach Anspruch 1,
**gekennzeichnet durch** eine elektronische, den Stator (4) zum Anlauf des Außenläufers (6) derart ansteuemde Startvorrichtung (2), dass der Außenläufer (6) gesteuert bis zu seiner Synchrondrehzahl beschleunigt wird und dann im netzgeführten Synchronbetrieb (IV) weiterläuft.

3. Synchronmotor nach Anspruch 1 oder 2,
**dadurch** gekennzeichet, dass auf den Außenläufer (6) des Außenläufemotors ein Axial- oder Radialventilatorrad montiert ist.

4. Synchronmotor nach einem der Ansprüche 1 bis 3,
**gekennzeichnet durch** einen dem Außenläufer (6) zugeordneten Läufersensor (18) zum Erzeugen eines sich bei Rotation des Außenläufers (6) alternierend ändemden Magnetpolaritätssignals (S18).

5. Synchronmotor nach einem der Ansprüche 1 bis 4,
**gekennzeichnet durch** einen die Betriebs-Wechselspannung (U) bezüglich ihrer Polarität überwachenden und ein entsprechend altermierendes Spannungspolaritätssignal (S20) erzeugenden Spannungssensor (20).

6. Synchronmotor nach einem der Ansprüche 1 bis 5,
**dadurch gekennzeichnet, dass** der Anlauf des Außenläufers (6) in mehrere Phasen ( I, II, III, IV) unterteilt ist, in denen jeweils eine unterschiedliche, an die jeweilige Drehzahl angepaßte Ansteuerung der Statorwicklung (8) erfolgt.

7. Synchronmotor nach Anspruch 6,
**gekennzeichnet durch** eine Anlaufphase (I) zum Starten des Außenläufers (6) in die gewünschte Drehrichtung bis zu einer ersten Übergangsdrehzahl.

8. Synchronmotor nach Anspruch 7,
**dadurch gekennzeichnet,**
**dass** in der Anlaufphase (I) die Statorwicklung (8) insbesondere über die Anzapfung (8a) nur dann angesteuert wird, wenn Netzspannung und Polradspannung die gleiche Polarität aufweisen.

9. Synchronmotor nach einem der Ansprüche 6 bis 8,
**gekennzeichnet durch** eine Hochlaufphase (II) zum Beschleunigen des Außenläufers (6) auf eine zweite, in der Nähe der Synchrondrehzahl liegende Übergangsdrehzahl.

10. Synchronmotor nach Anspruch 9,
**dadurch gekennzeichnet, dass** während der Hochlaufphase (II) die Läuferposition - vorzugsweise digital durch lmpulszählung - anhand der Zeiten zwischen jeweils zwei aufeinanderfolgenden Polaritätswechseln der Polradspannung bzw. des Magnetpolarisierungssignals (S18) und der seit dem vorhergehenden Polaritätswechsel vergangenen Zeit bestimmt wird.

11. Synchronmotor nach Anspruch 9 oder 10,
**dadurch gekennzeichnet, dass** während der Hochlaufphase eine vorausschauende Bewertung der Phasenlage zwischen Netzspannung (Signal S20) und Polradspannung (Signal S18) dahingehend erfolgt, ob sich im Falle eines Durchschaltens des jeweiligen Schaltelementes (10) eine maximal beschleunigende Wirkung in Drehrichtung ergeben kann, wozu insbesondere auf die Rotorposition (Signal S18) bezogene Bereiche definiert werden, in denen selektiv die positiven oder negativen Halbwellen oder Halbwellenteile auf die Statorwicklung (8) geschaltet werden.

12. Synchronmotor nach einem der Ansprüche 6 bis 11,
**gekennzeichnet durch** eine Synchronisierungsphase (III) zum gesteuerten Überführen der Läuferdrehzahl bis in die Synchrondrehzahl, d.h. bis in den Synchronbetrieb (IV).

13. Synchronmotor nach Anspruch 12,
**dadurch gekennzeichnet,**
**dass** die Synchronisierungsphase wie folgt untergliedert ist:
- Erkennung eines für die Synchronisation günstigen Zeitpunktes (III.1) insbesondere in Abhängigkeit von der Phasenlage (ϕ) zwischen Polradspannung und Betriebsspannung (U),
- Stabilisierungsphase (III.2),
- Fluß-Anpassung (III.3), insbesondere durch Umschaltung der Statorwicklung (8) auf reduzierten Fluß.

14. Synchronmotor nach Anspruch 13,
**dadurch gekennzeichnet,**
**dass** nach einem Erkennen des für die Synchronisierung geeigneten Zeitpunktes die Ansteuerung des Schaltetementes (10) derart geändert wird, dass zusätzlich zum beschleunigenden Drehmoment zeitweise auch bremsende Drehmomente zugelassen werden, um den Motor auf die Synchrondrehzahl zu stabilisieren.

15. Synchronmotor nach Anspruch 13 oder 14,
**dadurch gekennzeichnet,**
**dass** die Fluß-Anpassung - insbesondere durch Ansteuerung des zweiten Schaltelementes (12) anstatt des ersten Schaltelementes (10) - erfolgt, wenn die Differenz zwischen Momentandrehzahl und Synchrondrehzahl vom negativen , untersynchronen Bereich in den positiven, übersynchronen Bereich wechselt.

## Claims

1. Mains-commutated AC synchronous motor (1) with permanent magnet excitation in the form of an external ; rotor motor with a permanent-magnet external rotor (6) which rotates about an inner stator (4),
**characterized in that** the stator (4) has a stator winding (8) such that the magnet flux can be varied at least between two values, to be precise a higher flux for starting and a lower flux for synchronous operation, for which purpose the stator winding (8) has a tap (8a), in which case only a portion of the stator winding (8) may be driven via a first switching element (10) and the tap (8a), or the entire stator winding (8) may be driven via a second switching element (12) for the lower flux, and in which case the switching elements (10, 12) are each solid-state switches, such as triacs or thyristors and can be driven by control signals (S10, S12) from a control unit (14).

2. Synchronous motor according to Claim 1,
**characterized by** an electronic starting apparatus (2) which drives the stator (4) in order to start the external rotor (6) such that the external rotor (6) is accelerated in a concrolled manner up to its synchronous rotation speed, and then continues to run in the mains-commutated synchronous mode (IV).

3. Synchronous motor according to Claim 1 or 2,
**characterized in that** an axial or radial fan impeller is mounted on the external rotor (6) of the external rotor motor.

4. synchronous motor according to one of Claims 1 to 3,
**characterized by** a rotor sensor (18), which is associated with the external rotor (6), for production of a magnetic polarity signal (S18) which varies in an alternating manner during rotation of the external rotor (6).

5. Synchronous motor according to one of Claims 1 to 4,
**characterized by** a voltage sensor (20) which monitors the polarity of the operating AC voltage (U) and produces a correspondingly alternating voltage polarity signal (S20).

6. Synchronous motor according to one of Claims 1 to 5,
**characterized in that** the process of starting the external rotor (6) is subdivided into a number of phases (I, II, III, IV), in each of which the stator winding (8) is driven differently, matched to the respective rotation speed.

7. Synchronous motor according to Claim 6,
**characterized by** a starting phase (I) for starting the external rotor (6) in the desired rotation direction up to a first transitional rotation speed.

8. Synchronous motor according to Claim 7,
**characterized in that**, in the starting phase (I), the stator winding (8) is driven in particular via the tap (8a) only when the polarity of the mains voltage is the same as that of the rotor voltage.

9. Synchronous motor according to one of Claims 6 to 8,
**characterized by** a running-up phase (II) for acceleration of the external rotor (6) to a second transitional rotation speed which is in the vicinity of the synchronous rotation speed.

10. Synchronous motor according to Claim 9,
**characterized in that**, during the running-up phase (II). the rotor position is determined - preferably digitally by counting the number of pulses - on the basis of the times between in each case two successive polarity changes of the rotor voltage or of the magnet polarization signal (S18), and the time which has passed since the previous polarity change.

11. synchronous motor according to Claim 9 or 10,
**characterized in that**, during the running-up phase, a predictive assessment is made of the phase angle between the maine voltage (signal S20) and the rotor voltage (signal S18 ) in order to determine whether a maximum accelerating effect in the rotation direction can be achieved when the respective switching element (10) is switched on, for which purpose, in particular, areas are defined which are related to the rotor position (signal S18) and in which the positive or negative half-cycles or half-cycle parts are passed selectively to the stator winding (8).

12. Synchronous motor according to one of Claims 6 to 11,
**characterized by** a synchronization phase (III) in order to change the rotor rotation speed to the synchronous rotation speed in a controlled manner, that is to say to change to the synchronous mode (IV).

13. Synchronous motor according to Claim 12,
**characterized in that** the synchronization phase is subdivided as follows:
- identification of a time (III.1) which is good for synchronization, in particular as a function of the phase angle (ϕ) between the rotor voltage and the operating voltage (U),
- stabilization phase (III.2),
- flux matching (III.3), in particular by switching the stator winding (8) to a reduced flux.

14. Synchronous motor according to claim 13,
**characterized in that**; after identification of the time which is suitable for synchronization, the drive to the switching element (10) is changed such that, in addition to the accelerating torque, braking torques are also allowed at times, in order to stabilize the motor at the synchronous rotation speed.

15. Synchronous motor according to Claim 13 or 14,
**characterized in that** the flux matching is carried out in particular by driving the second switching element (12) instead of the first switching element (10), when the difference between the instantaneous rotation speed and the synchronous rotation speed changes from the negative, under-synchronous range to the positive, over-synchronous range.

## Revendications

1. Moteur synchrone à courant alternatif piloté par le réseau, excité par un aimant permanent (1), réalisé en tant que moteur à induit extérieur avec un induit extérieur (6) à aimant permanent tournant autour d'un stator intérieur (4),
**caractérisé en ce que** le stator (4) présente un bobinage de stator (8) de telle sorte que le flux magnétique peut varier au moins entre deux valeurs, à savoir un flux supérieur pour le démarrage et un flux inférieur pour le fonctionnement synchrone, le bobinage du stator (8) présentant une prise (8a) à cet effet, une partie du bobinage du stator (8) seulement pouvant être commandée pour le flux supérieur par l'intermédiaire d'un premier élément de commutation (10) et la prise (8a), ou tout le bobinage du stator (8) pouvant être commandé pour le flux inférieur par l'intermédiaire d'un deuxième élément de commutation (12), et les éléments de commutation (10, 12) étant conçus comme des interrupteurs statiques, tels que des triacs ou des thyristors, et pouvant être commandés par une unité de commande (14) avec des signaux de commande (S10, S 12).

2. Moteur synchrone selon la revendication 1,
**caractérisé par** un dispositif de démarrage (2) électronique commandant le stator (4) pour le démarrage de l'induit extérieur (6) de telle sorte que l'induit extérieur (6) est accéléré, commandé, jusqu'à sa vitesse synchrone et continue à marcher ensuite en fonctionnement synchrone (IV) piloté par le réseau.

3. Moteur synchrone selon la revendication 1 ou 2,
**caractérisé en ce qu'**une roue de ventilateur axiale ou radiale est montée sur l'induit extérieur (6) du moteur à induit extérieur.

4. Moteur synchrone selon l'une des revendications 1 à 3,
**caractérisé par** un capteur d'induit (18) associé à l'induit extérieur (6) destiné à produire un signal de polarité magnétique (S 18) variant alternativement lors de la rotation de l'induit extérieur (6).

5. Moteur synchrone selon l'une des revendications 1 à 4,
**caractérisé par** un capteur de tension (20) surveillant la tension alternative de service (U) en ce qui concerne sa polarité et produisant un signal de polarité de tension (S20) alternant de manière correspondante.

6. Moteur synchrone selon l'une des revendications 1 à 5,
**caractérisé en ce que** le démarrage de l'induit extérieur (6) est subdivisé en plusieurs phases (I, II, III, IV) dans lesquelles une commande du bobinage du stator (8) chaque fois différente, adaptée à la vitesse de rotation est effectuée.

7. Moteur synchrone selon la revendication 6,
**caractérisé par** une phase de démarrage (I) pour démarrer l'induit extérieur (6) dans le sens de rotation voulu jusqu'à une première vitesse de transition.

8. Moteur synchrone selon la revendication 7,
**caractérisé en ce que**, dans la phase de démarrage (I), le bobinage du stator (8) n'est commandé en particulier par l'intermédiaire de la prise (8a) que lorsque la tension du réseau et la force électromotrice synchrone présentent la même polarité.

9. Moteur synchrone selon l'une des revendications 6 à 8,
**caractérisé par** une phase de montée en régime (II) pour accélérer l'induit extérieur (6) à une deuxième vitesse de transition située près de la vitesse synchrone.

10. Moteur synchrone selon la revendication 9,
**caractérisé en ce que**, pendant la phase de montée en régime (II), la position de l'induit est déterminée, de préférence de façon numérique par comptage d'impulsions, à l'aide du temps entre deux changements de polarité successifs de la force électromotrice synchrone ou du signal de polarisation magnétique (S18) et du temps passé depuis le changement de polarité précédent.

11. Moteur synchrone selon la revendication 9 ou 10,
**caractérisé en ce que**, pendant la phase de montée en régime, une évaluation prévisionnelle de la position de phase entre tension du réseau (signal S20) et force électromotrice synchrone (signal S 18) est effectuée pour déterminer si, dans le cas d'une connexion de l'élément de commutation (10), un effet d'accélération maximal peut en résulter, et à cet effet des zones relatives en particulier à la position du rotor (signal S 18) sont définies, dans lesquelles les demi-ondes positives ou négatives ou parties de demi-ondes sont branchées sélectivement sur le bobinage du stator (8).

12. Moteur synchrone selon l'une des revendications 6 à 11,
**caractérisé par** une phase de synchronisation (III) pour le transfert commandé de la vitesse de l'induit jusqu'à la vitesse synchrone, c'est-à-dire jusqu'au fonctionnement synchrone (IV).

13. Moteur synchrone selon la revendication 12,
**caractérisé en ce que** la phase de synchronisation est subdivisée comme suit :
- Reconnaissance d'un moment favorable pour la synchronisation (III.1 ), en particulier en fonction de la position de phase (ϕ) entre force électromotrice synchrone et tension de service (U),
- Phase de stabilisation (III.2),
- Adaptation du flux (III.3), en particulier par commutation du bobinage du stator (8) sur flux réduit.

14. Moteur synchrone selon la revendication 13,
**caractérisé en ce que**, après la reconnaissance du moment approprié pour la synchronisation, la commande de l'élément de commutation (10) est modifiée de façon à ce que, en supplément au couple de rotation accélérant, des couples de rotation freinant soient créés par moments pour stabiliser le moteur à la vitesse synchrone.

15. Moteur synchrone selon la revendication 13 ou 14,
**caractérisé en ce que** l'adaptation du flux, en particulier par la commande du deuxième élément de commutation (12) au lieu du premier élément de commutation (10), est effectuée lorsque la différence entre vitesse instantanée et vitesse synchrone passe de la plage négative hyposynchrone à la plage positive hypersynchrone.
